# EUROPÄISCHE PATENTSCHRIFT

(11) **EP 3 643 415 B1**
(45) Veröffentlichungstag und Bekanntmachung des Hinweises auf die Patenterteilung: **22.02.2023**
(21) Anmeldenummer: 19203989.9
(22) Anmeldetag: 18.10.2019
(51) Int. Cl.: B08B 3/02, B05B 12/00

(54) **ROTATIONSREINIGUNGSDÜSE UND REINIGUNGSSYSTEM ZUM REINIGEN VON OBERFLÄCHEN IN EINER GETRÄNKEABFÜLLANLAGE**
ROTARY CLEANING NOZZLE AND CLEANING SYSTEM FOR CLEANING SURFACES IN A BEVERAGE FILLING SYSTEM
BUSE DE NETTOYAGE ROTATIVE ET SYSTÈME DE NETTOYAGE PERMETTANT DE NETTOYER DES SURFACES DANS UNE INSTALLATION DE REMPLISSAGE DE BOISSON

(30) Priorität: 18.10.2018 DE 102018125883
(43) Veröffentlichungstag der Anmeldung: 29.04.2020
(73) Patentinhaber: KRONES AG, 93073 Neutraubling (DE)
(72) Erfinder: Soellner, Juergen, 93073 Neutraubling (DE); Stubenhofer, Matthias, 93073 Neutraubling (DE); Mueller, Holger, 93073 Neutraubling (DE)
(74) Vertreter: Nordmeyer, Philipp Werner

(56) Entgegenhaltungen:
- EP-A2- 2 914 847
- CN-A- 106 733 354
- DE-A1- 2 712 395
- JP-A- 2004 113 588
- JP-B2- 3 922 059
- US-A- 1 982 315
- US-A1- 2013 098 478
- US-A1- 2015 251 199

## Beschreibung

### Technisches Gebiet

Die vorliegende Erfindung betrifft eine Rotationsreinigungsdüse und ein Reinigungssystem mit einer derartigen Rotationsreinigungsdüse zum Reinigen von Oberflächen in einer Getränkeabfüllanlage, beispielsweise in einer aseptischen Getränkeabfüllanlage.

### Stand der Technik

Zur Einhaltung von Hygieneanforderungen werden bei der Verpackung von Lebensmitteln aseptische Anlagen eingesetzt, in denen Prozessgüter unter sterilen Bedingungen verarbeitet werden. Hierzu zählen beispielsweise aseptische Getränkeabfüllanlagen.

Derartige Anlagen weisen von der Umgebung abgegrenzte Reinräume auf, die sowohl von den zu befüllenden Behältern als auch von dem Füllprodukt durchlaufen werden und in denen Behandlungsstationen zum Behandeln der Behälter angeordnet sind. Unter den Behandlungsstationen können beispielsweise Streckblasstationen zum Herstellen von zu befüllenden Behältern aus Preforms, Rinsstationen zum Rinsen der Behälter, Abfüllstationen zum Befüllen der Behälter mit einem Füllprodukt und Verschließstationen zum Verschließen der mit dem Füllprodukt befüllten Behälter sein.

Zur Einhaltung der Hygieneanforderungen werden die Reinräume turnusgemäß oder bei Bedarfbeispielsweise nach Betriebsunterbrechungen - einer Reinigung und einer nachfolgenden Sterilisierung unterzogen. Die Reinigung erfolgt üblicherweise durch das Beaufschlagen der jeweiligen Anlagenkomponenten mit einem Reinigungsmedium, mittels dessen Produktreste abgespült werden können. Nachfolgend kann ein Desinfektionsmedium oder ein Sterilisationsmedium aufgebracht werden. Die jeweiligen Reinigungs-, Sterilisations- und/der Desinfektionsmedien werden üblicher Weise mittels in der Anlage eingebrachten Düsen auf die jeweiligen Anlagenkomponenten aufgebracht.

Unter den Düsen zum Aufbringen der jeweiligen Reinigungs-, Sterilisations- und/der Desinfektionsmedien auf die Anlagenkomponenten sind stationäre Düsen bekannt, die unterschiedliche Sprühmuster verwenden können.

Zum Versprühen der jeweiligen Reinigungs-, Sterilisations- und/der Desinfektionsmedien sind auch Rotationsreinigungsdüsen bekannt, welche für spezielle Anwendungen bei der Reinigung und Desinfektion in den Reinräumen eingesetzt werden. Diese Rotationsreinigungsdüsen zeichnen sich durch einen im Betrieb rotierenden Düsenkopf aus, der das jeweiligen Reinigungs-, Sterilisations- und/der Desinfektionsmedien mit einem großflächigen und rotationssymmetrischen Sprühbild auf die Anlagenkomponenten aufbringen kann. Über die Rotationsbewegung kann auch die mechanische Abreinigungskomponente verstärkt werden, da ein konzentrierter Reinigungsmedienstrahl periodisch eine vorgegebene Fläche überstreichen kann.

Verschleißerscheinungen oder Verunreinigungen in dem jeweiligen Reinigungs-, Sterilisations- und/der Desinfektionsmedium können zu einem Ausfall oder zu einer Fehlfunktion einzelner Rotationsreinigungsdüsen führen. Dies kann sich beispielsweise darin äußern, dass die Rotation des Düsenkopfes gesperrt ist. Bei einer derartigen Fehlfunktion besteht jedoch die Gefahr, dass Anlagenoberflächen, beispielsweise Oberflächen des Reinraumgehäuses, nicht vollständig mit dem jeweiligen Medium beaufschlagt werden und somit nicht ordnungsgemäß gereinigt und/oder sterilisiert werden.

Es besteht somit ein Bedarf an einem Überwachungssystem, das eine Fehlfunktion von Reinigungsrotationsdüsen anzeigt.

Aus dem Stand der Technik sind kapazitive Durchflusssensoren bekannt, die in einer Zufuhrleitung stromaufwärts der Rotationsreinigungsdüse angeordnet sind und einen Durchfluss des Reinigungsmittels in Richtung der Rotationsreinigungsdüse überwachen. Eine durch Sperrung der Rotationsbewegung des Düsenkopfes hervorgerufene Fehlfunktion lässt sich durch derartige Durchflusssensoren jedoch nicht bestimmen.

Ferner ist aus der DE 29 18 476 A1 eine Überwachungseinrichtung für Reinigungsdüsen zur Innenreinigung von Nahrungsmitteltanks bekannt. Die Überwachungseinrichtung umfasst einen Kontaktgeber, insbesondere einen Magneten, der synchron mit der Rotationsreinigungsdüse bewegt wird und induktiv Einfluss auf einen außerhalb der Reinigungsdüse angeordneten Kontaktnehmer zum Überwachen der Drehfrequenz der Rotationsreinigungsdüse nimmt.

Die DE 27 12 395 A1 beschreibt eine Geschwindigkeitsregelvorrichtung für Rotationsdüsen mit einer Lichtquelle zur Kontrolle der Reinigungsarbeit in geschlossenen Behältern. Die WO 2014/068594 A2 beschreibt ein Bewegungssteuersystem und - verfahren mit Energiegewinnung.

### Darstellung der Erfindung

Ausgehend von dem bekannten Stand der Technik ist es eine Aufgabe der vorliegenden Erfindung, eine verbesserte Rotationsreinigungsdüse zum Reinigen von Oberflächen in einer Getränkeabfüllanlage bereitzustellen, deren Betrieb zuverlässig überwacht werden kann und die gleichzeitig eine modulare Bauweise aufweist. Ferner ist es eine Aufgabe der vorliegenden Erfindung, ein Reinigungssystem mit einer derartigen Rotationsreinigungsdüse bereitzustellen.

Die Aufgaben werden durch eine Rotationsreinigungsdüse mit den Merkmalen des Anspruchs 1 und durch ein Reinigungssystem mit den Merkmalen des Anspruchs 14 gelöst. Vorteilhafte Weiterbildungen ergeben sich aus den Unteransprüchen sowie der vorliegenden Beschreibung und den Figuren.

Entsprechend wird eine Rotationsreinigungsdüse zum Reinigen von Oberflächen einer Getränkeabfüllanlage mittels eines Fluids vorgeschlagen, umfassend einen Düsenstock mit einem Zufuhrkanal für das Fluid und einen an dem Düsenstock drehbar gelagerten Düsenkopf mit wenigstens einer Düsenaustrittsöffnung, aus der im Betrieb durch den Zufuhrkanal und den Düsenkopf strömendes Fluid in Form eines Reinigungsstrahls austritt. Ferner umfasst die Rotationsreinigungsdüse einen elektrischen Generator zum Induzieren elektrischer Energie durch Rotation des Düsenkopfes und eine Kontrolleinheit zum Anzeigen einer Rotation des Düsenkopfes in Abhängigkeit der induzierten elektrischen Energie.

In der vorgeschlagenen Rotationsreinigungsdüse ist der elektrische Generator dazu eingerichtet, bei ordnungsgemäßem Betrieb, also bei Rotation des Düsenkopfes, durch die Rotation induzierte elektrische Energie bereitzustellen. Die derart induzierte Energie kann von der Kontrolleinheit dazu genutzt werden, eine Rotation des Düsenkopfes und somit einen ordnungsgemäßen Betrieb der Rotationsreinigungsdüse anzuzeigen. Die induzierte elektrische Energie kann jedoch nicht nur als Indikator für das Vorhandensein einer Rotation des Düsenkopfes, sondern auch zur Betätigung der Kontrolleinheit genutzt werden. Mit anderen Worten kann der elektrische Generator als Energiequelle für die Kontrolleinheit dienen. Auf diese Weise kann ein geringer Teil der kinetischen und inneren Energie des durch die Rotationsreinigungsdüse strömenden Fluids zum Betreiben der Kontrolleinheit genutzt werden. Im Allgemeinen wird eine derartige Umwandlung beziehungsweise Abzweigung kleiner Mengen elektrischer Energie für Verbraucher mit geringer Leistung aus bereits im System vorhandenen Energiequellen, wie z.B. einem Fluidstrom, auch als "Energy Harvesting" bezeichnet.

Diese strukturelle und funktionelle Ausgestaltung ermöglicht, dass die Rotationsreinigungsdüse selbstständig, also ohne Kopplung zu Komponenten außerhalb der Rotationsreinigungsdüse, eine Fehlfunktion der Reinigungsrotationsdüse erkennen und anzeigen kann. Im Ergebnis wird somit eine Rotationsreinigungsdüse bereitgestellt, die mit einem Überwachungssystem für Fehlfunktionen ausgestattet ist und gleichzeitig einen modularen Aufbau aufweist, bei dem Abhängigkeiten und Schnittstellen zu anderen Komponenten, wie z.B. einer stationären Überwachungseinheit oder einer Stromversorgung, der Getränkeabfüllanlage minimiert sind. Dieser modulare Aufbau weist den Effekt auf, dass die vorgeschlagene Rotationsreinigungsdüse flexibel und austauschbar in gängigen Getränkeabfüllanlagen einsetzbar ist, ohne dass daraus ein hoher Anpassungsbedarf für das Gesamtsystem resultiert.

Die vorgeschlagene Rotationsreinigungsdüse ist vorzugsweise zum Reinigen von Oberflächen in einer Getränkeabfüllanlage vorgesehen, kann jedoch in beliebigen aseptischen Anlagen oder anderen Anlagen zur Reinigung von Oberflächen zum Einsatz kommen.

Die Reinigungswirkung der Rotationsreinigungsdüse ist auf das aus dem Düsenkopf über die Düsenaustrittsöffnung austretende Fluid zurückzuführen. Das Fluid kann gasförmig oder flüssig sein. Vorzugsweise ist das Fluid ein Reinigungsmittel, das eine die Reinigung begünstigende chemische Struktur aufweist. Beispielsweise kann das Fluid ein Mittel zur Sterilisierung der Oberflächen sein, ein sogenannter Sterilisator. Entsprechend kann das Fluid beispielsweise Wasserstoffperoxid (HzOz) oder Peressigsäure umfassen.

Um im Betrieb ein großflächiges und gleichmäßiges Beaufschlagen der zu reinigenden Oberflächen mittels des Fluids sicherzustellen, kann der Düsenkopf relativ zu dem Düsenstock rotatorisch betätigt werden. Hierzu kann die Rotationsreinigungsdüse derart eingerichtet sein, dass das dem Düsenkopf im Betrieb über den Zufuhrkanal zuzuführende und diesen zu durchströmende Fluid den Düsenkopf rotatorisch betätigt. Genauer kann das Fluid beim Durchströmen des Düsenkopfs eine Kraft, insbesondere eine Rückstoßkraft, auf den Düsenkopf ausüben, die ein Drehmoment und somit die Rotation des Düsenkopfes bewirkt. Mit anderen Worten, indem das Fluid durch den Düsenkopf strömt, erfährt dieser einen Rückstoß und wird so rotatorisch betätigt.

Zum Erzeugen der den Düsenkopf rotatorisch betätigenden Kraft kann der Düsenkopf dazu ausgebildet sein, bei rotatorischer Betätigung den Reinigungsstrahl in einer von einer Rotationsrichtung des Düsenkopfes abgewandten Richtung, insbesondere einer zu der Rotationsrichtung entgegengesetzten Richtung, aus der Düsenaustrittsöffnung auszustoßen. Ferner kann der Düsenkopf derart ausgebildet sein, dass das Fluid beim Durchströmen desselben umgelenkt wird. Entsprechend kann der Düsenkopf mit wenigstens einem Zufuhrabschnitt versehen sein, der dem Düsenkopf über den Zufuhrkanal zuführbares Fluid in Richtung der Düsenaustrittsöffnung umlenkt.

Alternativ oder zusätzlich kann die Rotationsreinigungsdüse derart eingerichtet sein, dass ein Rotationsantrieb den Düsenkopf rotatorisch betätigt. Der Rotationsantrieb kann beispielsweise ein Elektromotor sein.

Um den Düsenkopf an dem Düsenstock drehbar zu lagern, kann wenigstens ein Gleitlager, insbesondere ein rotatorisches Gleitlager, zwischen dem Düsenkopf und dem Düsenstock vorgesehen sein. Das Gleitlager kann mit einer Spielpassung versehen sein.

Der Düsenstock kann hülsenförmig ausgebildet sein. Entsprechend kann der Düsenkopf ringförmig ausgebildet und axial auf den Düsenstock aufgeschoben sein. In dieser Ausgestaltung kann in axialer Richtung des Düsenstocks an entgegengesetzten Enden des Düsenkopfes jeweils ein Gleitlager vorgesehen sein, zwischen denen der wenigstens eine Zufuhrabschnitt des Düsenkopfes und die wenigstens eine Zufuhröffnung des Düsenstocks angeordnet sein können.

Der Düsenstock kann mit einer einseitig geöffneten Ausnehmung versehen seien, die den Zufuhrkanal für das Fluid bildet. Der Zufuhrkanal erstreckt sich vorzugsweise entlang einer axialen Richtung des Düsenstocks. Die als Zufuhrkanal ausgebildete Ausnehmung kann zylinderförmig ausgebildet sein. In die Ausnehmung kann die wenigstens eine Zufuhröffnung münden. Die Zufuhröffnung kann in Form einer Durchgangsöffnung in einer Seitenwand des Düsenstocks ausgebildet sein und sich insbesondere entlang einer radialen Richtung des Düsenstocks erstrecken. Der Düsenstock kann eine Vielzahl von Zufuhröffnungen aufweisen, die in Umfangsrichtung des Düsenstocks in regelmäßigen Abständen zueinander ausgebildet sein können. Beispielsweise kann der Düsenstock in dessen Seitenwand zwei gegenüberliegend zueinander angeordnete Zufuhröffnungen aufweisen.

Zum Induzieren elektrischer Energie durch Rotation des Düsenkopfes umfasst die Rotationsreinigungsdüse den elektrischen Generator. Im Allgemeinen wird unter einem elektrischen Generator eine Vorrichtung zum Umwandeln von kinetischer in elektrische Energie mittels elektromagnetischer Induktion verstanden. Der grundlegende Aufbau eines elektrischen Generators ist dem Fachmann aus dem Stand der Technik bekannt und ist hier nicht im Detail beschrieben. Im Nachstehenden wird daher lediglich auf Besonderheiten der hier offenbarten Rotationsreinigungsdüse eingegangen.

Der Generator in der Rotationsreinigungsdüse umfasst gemäß der Erfindung einen an oder in dem Düsenkopf angeordneten Rotor und einen dazu ausgerichteten, an oder in dem Düsenstock angeordneten Stator. Vorliegend wird unter einem Stator ein feststehendes Bauteil des Generators verstanden. Entsprechend wird unter einem Rotor ein bewegliches, insbesondere rotierendes, Bauteil des Generators verstanden. In einer Ausführungsform kann der Rotor in Form wenigstens eines Magneten und der Stator in Form wenigstens einer Induktionsspule bereitgestellt sein. Alternativ kann der Rotor in Form wenigstens einer Induktionsspule und der Stator in Form wenigstens eines Magneten bereitgestellt sein.

Beispielsweise können der Düsenkopf mit dem Magneten und der Düsenstock mit der Induktionsspule bereitgestellt sein. In dieser Ausführungsform kann die Kontrolleinheit zusammen mit der Induktionsspule in oder an dem Düsenstock angeordnet sein. Alternativ oder zusätzlich, können der Düsenkopf mit der Induktionsspule und der Düsenstock mit dem Magneten bereitgestellt sein. In dieser Ausführungsform kann die Kontrolleinheit zusammen mit der Induktionsspule in oder an dem Düsenkopf angeordnet sein.

Der Magnet umfasst vorzugsweise wenigstens einen Permanentmagneten. Entsprechend der Ausgestaltung des Düsenkopfes oder des Düsenstocks kann der Magnet ein aus mehreren Permanentmagneten aufgebauter Magnetring sein, umfassend eine Vielzahl umlaufend nebeneinander angeordneter Magnetpole. Dabei weisen jeweils in Umlaufrichtung nebeneinander angeordnete Magnetpole vorzugsweise eine unterschiedliche Polung auf.

Die Induktionsspule kann als Ringspule mit einer Vielzahl von Wicklungen bereitgestellt sein. In einer Weiterentwicklung kann der Generator in Form eines sogenannten Klauenpolgenerators bereitgestellt sein, bei dem die Ringspule in einem ferromagnetischen Käfig oder einer ferromagnetischen Ummantelung eingebettet ist. Der Käfig kann derart bereitgestellt sein, dass an einer dem Magneten, insbesondere dem Magnetring, zugewandten Seite dieser mit einer Vielzahl in Umlaufrichtung voneinander beabstandeter, flächiger Abschnitte versehen ist. Mit anderen Worten, an einer dem Magneten zugewandten Seite weist der Käfig in Umlaufrichtung zwischen den flächigen Abschnitten Spalte auf, die sich im Wesentlichen entlang der gesamten Breite des Käfigs in einer Richtung quer zur Umlaufrichtung erstrecken. Diese in Umlaufrichtung voneinander beabstandeten, flächigen Abschnitte werden auch als sogenannte "Klauen" bezeichnet.

Die Anzahl und Position der flächigen Abschnitte sind vorzugsweise an die Anzahl und Position der zu der Ringspule zugewandten Magnetpole des Magneten angepasst. Vorzugsweise entspricht die Anzahl der flächigen Abschnitte der Anzahl der Magnetpole des Magneten. Die flächigen Abschnitte sind dabei vorzugsweise relativ zu den Magnetpolen des Magneten ausgerichtet. Mit anderen Worten, durch Rotieren des Düsenkopfes relativ zu dem Düsenstock kann der Magnet relativ zu dem Käfig und der darin eingebetteten Ringspule derart positionierbar sein, dass jeweils ein flächiger Abschnitt des Käfigs jeweils einem Magnetpol des Magnetrings zugewandt ist.

Diese als Klauenpolgenerator vorgeschlagene Ausgestaltung des Generators weist den Effekt auf, dass sich hohe Spannungen und Ströme bei einer vergleichsweise kompakten Bauweise des Generators induzieren lassen. Mit anderen Worten, auf diese Weise lässt sich ein kompakter und zugleich leistungsfähiger Generator in der Rotationsreinigungsdüse realisieren.

Der Generator, insbesondere die Induktionsspule, ist vorzugsweise mit der Kontrolleinheit elektrisch leitend verbunden, um der Kontrolleinheit die durch den Generator induzierte elektrische Energie zuzuführen. Die Kontrolleinheit kann entsprechend dazu eingerichtet sein, eine Rotation des Düsenkopfes anzuzeigen, wenn dieser vom Generator induzierte elektrische Energie zugeführt wird. Die von dem Generator induzierte elektrische Energie kann zum Betreiben der Kontrolleinheit genutzt werden. Beispielsweise kann die Kontrolleinheit in Abhängigkeit der von dem Generator zugeführten elektrischen Energie in einem eingeschalteten und einem ausgeschalteten Zustand betrieben werden. Genauer kann die Kontrolleinheit in dem eingeschalteten Zustand betrieben werden, in dem eine Rotation des Düsenkopfes angezeigt wird, wenn der Kontrolleinheit von dem Generator elektrische Energie zugeführt wird. Entsprechend kann die Kontrolleinheit in dem ausgeschalteten Zustand betrieben werden, in dem eine Rotation des Düsenkopfes nicht angezeigt wird, wenn die Zufuhr elektrischer Energie unterbrochen wird.

Weiterhin kann die Rotationsreinigungsdüse dazu eingerichtet sein, die von dem Generator induzierte elektrische Energie der Kontrolleinheit in Form von Gleichstrom oder Wechselstrom zuzuführen. Beispielsweise kann der elektrische Generator zum Induzieren von Wechselstrom eingerichtet sein, wobei zwischen dem Generator und der Kontrolleinheit ein an die Rotation des Düsenkopfes gekoppelter Kommutator oder ein Gleichrichter, beispielsweise ein Brückengleichrichter oder ein Einweggleichrichter, zwischengeschaltet sein kann. Auf diese Weise kann der Kontrolleinheit die von dem Generator induzierte elektrische Energie in Form von Gleichstrom zugeführt werden.

In einer Weiterentwicklung kann die Rotationsreinigungsdüse einen Energiespeicher, insbesondere in Form eines Kondensators, umfassen. Der Energiespeicher ist vorzugsweise mit dem Generator, insbesondere der Induktionsspule, elektrisch leitend verbunden. Entsprechend kann der Energiespeicher durch die von dem Generator induzierte elektrische Energie aufladbar sein. Die Rotationsreinigungsdüse kann derart ausgebildet sein, dass von dem Generator induzierte Energie in Form von Gleichstrom dem Energiespeicher zuführbar ist. Hierzu kann in der elektrischen Verbindung zwischen dem Energiespeicher und dem Generator, insbesondere der Induktionsspule, ein an die Rotation des Düsenkopfes gekoppelter Kommutator oder ein Gleichrichter, beispielsweise ein Brückengleichrichter oder ein Einweggleichrichter, vorgesehen sein. Der elektrische Energiespeicher kann weiterhin elektrisch leitend mit der Kontrolleinheit verbunden und dazu eingerichtet sein, die darin gespeicherte elektrische Energie der Kontrolleinheit zuzuführen.

Die Verwendung des Energiespeichers ermöglicht, dass die Kontrolleinheit eine Rotation des Düsenkopfes in einem Zustand anzeigen kann, in dem der Düsenkopf nicht länger rotiert und somit keine elektrische Energie induziert. Auf diese Weise ermöglicht die Rotationsreinigungsdüse, dass auch nach Beendigung ihres Betriebs, beispielsweise nach Beendigung eines Reinigungsvorgangs, die Kontrolleinheit anzeigen kann, ob ein ordnungsgemäßer Betrieb, also eine Rotation des Düsenkopfes, stattgefunden hat. Dies ist besonders hilfreich, wenn eine Inspektion der Rotationsreinigungsdüse nach Beendigung ihres Betriebs, beispielsweise nach Beendigung eines Reinigungsvorgangs, erfolgt.

Zum Anzeigen der Rotation des Düsenkopfes kann die Kontrolleinheit in Form eines Emitters bereitgestellt sein, der in Erwiderung auf die durch den Generator induzierte elektrische Energie ein Signal emittiert. Mit anderen Worten, die Kontrolleinheit kann dazu eingerichtet sein, in Erwiderung auf die durch den Generator induzierte elektrische Energie ein die Rotation des Düsenkopfes anzeigendes Signal zu emittieren. Insbesondere kann die Kontrolleinheit dazu eingerichtet sein, das die Rotation des Düsenkopfes anzeigende Signal in einem Zustand, insbesondere in dem eingeschalteten Zustand, zu emittieren, in dem der Kontrolleinheit elektrische Energie von dem Generator oder dem Energiespeicher zugeführt wird.

Das die Rotation des Düsenkopfes anzeigende Signal kann ein elektromagnetisches Signal, insbesondere Licht oder ein Funksignal, und/oder ein elektrisches Signal sein. Ferner kann die Kontrolleinheit dazu eingerichtet sein, mit einem das Signal empfangenden Empfänger zusammen zu wirken. Der Empfänger kann mit einer stationären Überwachungseinheit der Getränkeabfüllanlage verbunden sein, die das empfangene Signal verarbeitet und für einen Benutzer der Getränkeabfüllanlage visuell, beispielsweise auf einem Monitor, darstellt.

Durch Emittieren eines elektromagnetischen Signals kann die Kontrolleinheit mit dem Empfänger und entsprechend mit der stationären Überwachungseinheit kabellos kommunizieren. Alternativ oder zusätzlich kann die Kontrolleinheit ein elektrisches Signal emittieren, dass über eine Kabelverbindung an den Empfänger und entsprechend an die stationäre Überwachungseinheit übertragbar sein kann.

Das Emittieren von Licht als das die Rotation des Düsenkopfes anzeigende Signal ermöglicht eine einfache visuelle Inspektion für Benutzer der Getränkeabfüllanlage, um einen ordnungsgemäßen Betrieb der Rotationsreinigungsdüse festzustellen. Beispielsweise kann die Kontrolleinheit eine Lichtquelle sein oder umfassen, insbesondere eine Leuchtdiode, die von dem Generator oder dem Energiespeicher bereitgestellte elektrische Energie zum Emittieren von Licht nutzt. Hierbei kann ein Leuchten der Lichtquelle einen ordnungsgemäßen Betrieb der Rotationsreinigungsdüse anzeigen. Entsprechend kann ein Benutzer der Getränkeabfüllanlage eine Fehlfunktion der Rotationsreinigungsdüse feststellen, wenn ein Leuchten der Lichtquelle ausbleibt.

In einer Weiterentwicklung kann die Kontrolleinheit mit der Induktionsspule verbunden und zusammen mit dieser in oder an dem Düsenkopf oder Düsenstock angeordnet sein. Entsprechend kann der Düsenkopf oder der Düsenstock aus einem für das von der Kontrolleinheit emittierte Signal durchlässigen Material hergestellt sein. Beispielsweise kann die Kontrolleinheit in einer weiteren Ausnehmung in dem Düsenstock angeordnet sein. Die weitere Ausnehmung kann mittels einer Verschlusskappe, insbesondere mittels einer wiederverschließbaren Verschlusskappe, für das fluide undurchlässig, beispielsweise luft- und/oder wasserdicht, verschlossen sein. Die Verschlusskappe kann aus einem für das von der Kontrolleinheit emittierte Signal durchlässigen Material hergestellt sein.

Weiterhin wird ein Reinigungssystem zum Reinigen von Oberflächen in einer Getränkeabfüllanlage bereitgestellt. Das Reinigungssystem umfasst die wenigstens eine voranstehend offenbarte Rotationsreinigungsdüse und die voranstehend offenbarte stationäre Überwachungseinheit. Die stationäre Überwachungseinheit ist zum Empfangen des von der Kontrolleinheit der Rotationsreinigungsdüse zu emittierenden, eine Rotation der Rotationsreinigungsdüse anzeigenden Signals und zum Ausgeben einer die Rotation betreffenden Information in Erwiderung auf das empfangene Signal eingerichtet.

Die stationäre Überwachungseinheit kann eine zentrale Überwachungseinheit der Getränkeabfüllanlage darstellen und umfasst vorzugsweise eine Ausgabeeinheit, beispielsweise einen Monitor, über den die Rotation des Düsenkopfes betreffende Informationen für einen Benutzer ausgegeben werden.

### Kurze Beschreibung der Figuren

Bevorzugte weitere Ausführungsformen der Erfindung werden durch die nachfolgende Beschreibung der Figuren näher erläutert. Dabei zeigen schematisch:
- Figur 1: eine Seitenansicht auf eine Rotationsreinigungsdüse einer ersten Ausführungsform;
- Figur 2: die Rotationsreinigungsdüse der ersten Ausführungsform in einer Längsschnittansicht;
- Figur 3: eine perspektivische Ansicht auf einen elektrischen Generator der in Figuren 1 und 2 gezeigten Rotationsreinigungsdüse; und
- Figur 4: ein Reinigungssystem mit einer Rotationsreinigungsdüse einer zweiten Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

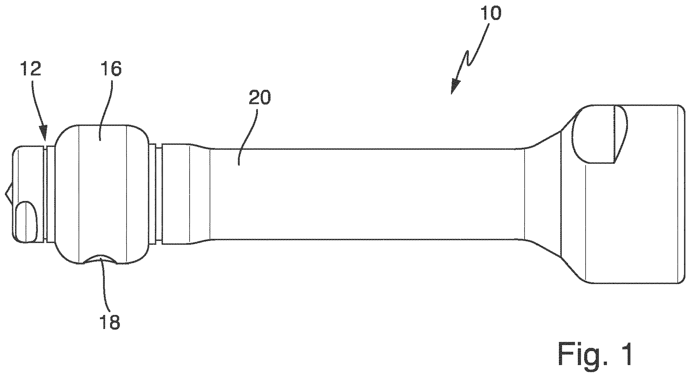

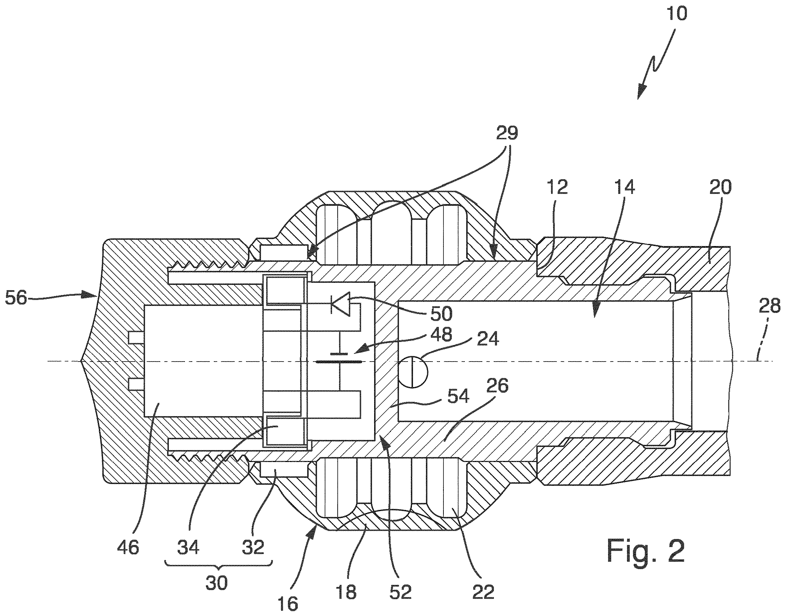

In Figuren 1 und 2 ist schematisch eine Rotationsreinigungsdüse 10 gezeigt, die zur Reinigung von Oberflächen in einer Getränkeabfüllanlage vorgesehen ist. Die Reinigung erfolgt mittels eines durch die Rotationsreinigungsdüse 10 zu versprühenden Fluids, insbesondere in Form eines Reinigungsmittels. Die gezeigte Rotationsreinigungsdüse 10 kann flexibel für unterschiedliche Fluide, insbesondere gasförmige oder flüssige Reinigungsmittel, eingesetzt werden. Die Rotationsreinigungsdüse 10 kann entsprechend dazu eingesetzt werden, die jeweiligen Reinigungs-, Sterilisations- und/der Desinfektionsmedien in einer Reinigungs- und/oder Sterilisationssequenz eines Reinigungsprogramms in einer Getränkeabfüllanlage vorgesehen sein.

Wie in Figur 2 gezeigt, umfasst die Rotationsreinigungsdüse 10 einen Düsenstock 12 mit einem Zufuhrkanal 14 für das Fluid und einen an dem Düsenstock12 drehbar gelagerten Düsenkopf 16 mit einer Düsenaustrittsöffnung 18, aus der im Betrieb durch den Zufuhrkanal 14 und den Düsenkopf 16 strömendes Fluid in Form eines Reinigungsstrahls austritt. Um im Betrieb ein großflächiges und gleichmäßiges Besprühen der zu reinigenden Oberflächen mittels des Fluids sicherzustellen und auch um eine weitere mechanische Abreinigungskomponente bereit zu stellen, wird der Düsenkopf 16 relativ zu dem Düsenstock 12 rotatorisch betätigt. Mit anderen Worten, im Betrieb rotiert der Düsenkopf 16 zusammen mit der Düsenaustrittsöffnung 18 um den Düsenstock 12, der über eine Verbindungsmuffe 20 fest an einer stationären Fluidleitung in einem Reinraum der Getränkeabfüllanlage befestigbar ist. Die Rotation des Düsenkopfes 16 bewirkt, dass aus der Düsenaustrittsöffnung 18 austretendes Fluid gleichmäßig und rotationssymmetrisch ausgegeben wird.

Genauer ist die Rotationsreinigungsdüse 10 derart eingerichtet, dass das dem Düsenkopf 16 über den Zufuhrkanal 14 zuzuführende und diesen zu durchströmende Fluid den Düsenkopf 16 rotatorisch betätigt. Hierzu ist der Düsenkopf 16 derart ausgebildet, dass bei rotatorischer Betätigung der Reinigungsstrahl in einer von einer Rotationsrichtung des Düsenkopfes 16 abgewandten Richtung, insbesondere einer zu der Rotationsrichtung entgegengesetzten Richtung, aus der Düsenaustrittsöffnung 18 ausgestoßen wird. Mit anderen Worten weist der Reinigungsstrahl auch eine tangentiale Komponente auf, die damit einen Rückstoß und damit eine Rotation des Düsenkopfs 16 hervorruft. Der Düsenkopf 16 umfasst einen Zufuhrabschnitt 22, der die Düsenaustrittsöffnung 18 fluidkommunikativ mit dem Zufuhrkanal 14 verbindet. Der Zufuhrabschnitt 22 ist derart ausgebildet, dass dem Düsenkopf 16 über den Zufuhrkanal 14 zuführbares Fluid in Richtung der Düsenaustrittsöffnung 18 umgelenkt wird. Auf diese Weise wird erreicht, dass über die Düsenaustrittsöffnung 18 austretendes Fluid einen Rückstoß an dem Düsenkopf 16 erzeugt und dieser dadurch rotatorisch betätigt wird. Alternativ oder zusätzlich kann die Rotationsreinigungsdüse 10 dazu eingerichtet sein, dass ein Rotationsantrieb den Düsenkopf 16 rotatorisch betätigt.

Zum Zuführen des Fluids aus dem Zufuhrkanal 14 in den Düsenkopf 16 umfasst der Düsenstock 12 mindestens eine Zufuhröffnung 24, die den Zufuhrkanal 14 mit dem Düsenkopf 16, insbesondere mit dem Zufuhrabschnitt 22, fluidkommunikativ verbinden. Die Zufuhröffnungen 24 können in Form von in einer Seitenwand 26 des Düsenstocks 12 gegenüberliegend angeordneten Durchgangsöffnungen ausgebildet sein, die in den Zufuhrkanal 14 münden.

Der Düsenstock 12 ist hülsenförmig ausgebildet und mit einer einseitig geöffneten, zylindrischen Ausnehmung versehen, die den Zufuhrkanal 14 für das Fluid bildet. Der Zufuhrkanal 14 erstreckt sich von einer Stirnfläche entlang einer axialen Richtung 28 des Düsenstocks 12. Der Düsenkopf 16 ist ringförmig ausgebildet und axial auf den Düsenstock 12 aufgeschoben. Zur drehbaren Lagerung des Düsenkopfes 16 relativ zu dem Düsenstock 12 umfasst die Rotationsreinigungsdüse 10 zwei rotatorische Gleitlager 29, die an in axialer Richtung 28 entgegengesetzten Enden des Düsenkopfes 16 angeordnet sind. Die Gleitlager 29 sind mit einer Spielpassung versehen und können so ein für das Fluid undurchlässiges Drehlager bilden.

Die Rotationsreinigungsdüse 10 umfasst ferner einen elektrischen Generator 30 zum Induzieren elektrischer Energie durch Rotation des Düsenkopfes 16 relativ zu dem Düsenstock 12. Hierzu ist ein Rotor des Generators 30 in Form eines Magnetrings 32 in dem Düsenkopf 16 angeordnet, der zu einem Stator in Form einer in dem Düsenstock 12 angeordneten Induktionsspule 34 ausgerichtet ist und im Betrieb relativ zu diesem rotiert. In der hier gezeigten Ausführungsform ist die Induktionsspule 34 in radialer Richtung innerhalb des Magnetrings 32 angeordnet. Entsprechend rotiert der Magnetring 32 im Betrieb um die Induktionsspule 34. Alternativ kann die Induktionsspule 34 in axialer Richtung 28 neben dem Magnetring 32 angeordnet sein.

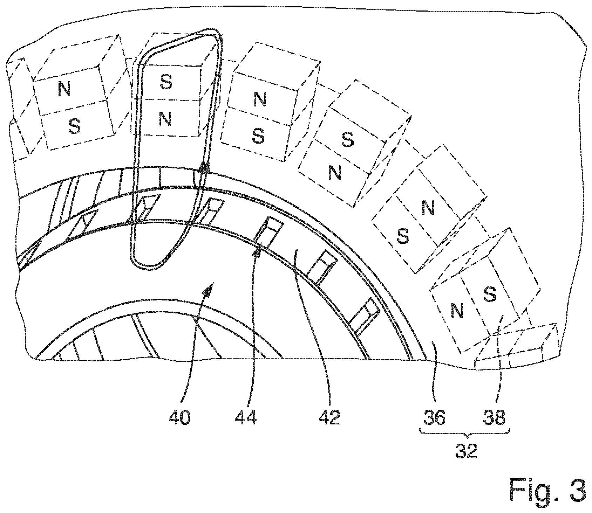

Wie in Figur 3 gezeigt, umfasst der Magnetring 32 einen Magnetläufer 36 in dem eine Vielzahl von umlaufend nebeneinander angeordneten Permanentmagneten 38 eingesetzt sind. Wie in der Figur durch die eine Polung der Permanentmagneten 38 kennzeichnenden Buchstaben "N" und "S" angezeigt, weisen jeweils in Umlaufrichtung nebeneinander angeordnete Magnetpole eine unterschiedliche Polung auf.

Der hier gezeigte Generator 30 ist in Form eines Klauenpolgenerators bereitgestellt, bei dem die Induktionsspule 34 eine in einem ferromagnetischen Käfig 40 eingebettete Ringspule ist. Der Käfig 40 ist an einer dem Magnetring 32 zugewandten Seite mit einer Vielzahl in Umlaufrichtung voneinander beabstandeter, flächiger Abschnitte 42 versehen. Die flächigen Abschnitte 42 bilden sogenannte "Klauen" des als Klauenpolgenerators bereitgestellten Generators 30, die in dem Käfig 40 jeweils voneinander durch quer zur Umlaufrichtung verlaufende Spalte 44 getrennt sind.

Die Anzahl und Position der flächigen Abschnitte 42 sind an die Anzahl und Position der zu der Induktionsspule 34 zugewandten Magnetpole angepasst. In der hier gezeigten Konfiguration entspricht die Anzahl der flächigen Abschnitte 42 der Anzahl der in Umlaufrichtung nebeneinander angeordneten Permanentmagneten 38. Ferner sind die flächigen Abschnitte 42 relativ zu den Permanentmagneten 38 derart ausgerichtet, dass durch Rotieren des Düsenkopfes 16 relativ zu dem Düsenstock 12 der Magnetring 32 relativ zu der Induktionsspule 34 in eine Position bewegt werden kann, in der jeweils ein flächiger Abschnitt 42 des Käfigs 40 einem Permanentmagneten 38 zugewandt ist.

Die Rotationsreinigungsdüse 10 umfasst ferner eine Kontrolleinheit 46 zum Anzeigen einer Rotation des Düsenkopfes 16 in Abhängigkeit der induzierten elektrischen Energie, die durch den Generator 30 bereitgestellt wird. Die von dem Generator 30 induzierte elektrische Energie wird von der Kontrolleinheit 46 zum einen als Indikator für eine Rotation des Düsenkopfes 16 und somit für einen ordnungsgemäßen Betrieb der Rotationsreinigungsdüse 10 und zum anderen als Energiequelle für deren Betätigung genutzt.

Hierzu ist die Kontrolleinheit 46, wie in Figur 2 gezeigt, elektrisch leitend mit der Induktionsspule 34 des Generators 30 verbunden, um dieser die durch den Generator 30 induzierte elektrische Energie zuzuführen. Die Rotationsreinigungsdüse 10 umfasst ferner einen Kondensator 48, der parallel zu der Kontrolleinheit 46 geschaltet und mit der Induktionsspule 34 des Generators 30 elektrisch leitend verbunden ist. In dieser Konfiguration wird die von dem Generator 30 induzierte elektrische Energie sowohl zum Betätigen der Kontrolleinheit 46 als auch zum Aufladen des Kondensators 48 genutzt. Wie in Figur 2 gezeigt, ist zwischen der Induktionsspule 34 und jeweils der Kontrolleinheit 46 und dem Kondensator 48 ein Einweggleichrichter 50 in Form einer Gleichrichterdiode angeordnet, der dazu eingerichtet ist, den von dem Generator 30 induzierten Wechselstrom dem Kondensator 48 und der Kontrolleinheit 46 als Gleichstrom zuzuführen.

Der Kondensator 48 dient als Energiespeicher, der der Kontrolleinheit 46 auch nach Ende der Rotation des Düsenkopfes 16 für eine begrenzte Zeit elektrische Energie zuführt. Auf diese Weise ermöglicht die Rotationsreinigungsdüse 10, dass auch nach Beendigung ihres Betriebs, beispielsweise nach Beendigung eines Reinigungsvorgangs, die Kontrolleinheit 46 anzeigen kann, ob ein ordnungsgemäßer Betrieb, also eine Rotation des Düsenkopfes 16, stattgefunden hat.

Die Kontrolleinheit 46 ist dazu eingerichtet, in Abhängigkeit der dieser zugeführten elektrischen Energie in einem eingeschalteten oder einem ausgeschalteten Zustand betrieben zu werden. In dem eingeschalteten Zustand zeigt die Kontrolleinheit 46 die Rotation des Düsenkopfes 16 an. In dem ausgeschalteten Zustand wird hingegen durch die Kontrolleinheit 46 keine Rotation des Düsenkopfes angezeigt. Die Kontrolleinheit 46 wird dann in dem eingeschalteten Zustand betrieben, wenn dieser elektrische Energie entweder durch den Generator 30 und/oder den Kondensator 48 zugeführt wird. Wird hingegen die Zufuhr elektrischer Energie unterbrochen, geht die Kontrolleinheit 46 in den ausgeschalteten Zustand über.

Die Kontrolleinheit 46 ist hier in Form einer Leuchtdiode (LED) bereitgestellt, die in Erwiderung auf die durch den Generator 30 induzierte elektrische Energie Licht im sichtbaren Wellenlängenbereich emittiert. Mit anderen Worten, in dieser Konfiguration zeigt ein Leuchten der Kontrolleinheit 46 an, dass der Düsenkopf 16 rotiert und somit die Rotationsreinigungsdüse 10 ordnungsgemäß betrieben wird. Auf diese Weise wird eine einfache visuelle Inspektion für einen Benutzer der Getränkeabfüllanlage ermöglicht.

Alternativ oder zusätzlich kann die Kontrolleinheit 46 dazu eingerichtet sein, elektromagnetische Strahlung im nichtsichtbaren Wellenlängenbereich zu emittieren. Genauer kann die Kontrolleinheit 46 dazu eingerichtet sein, die elektromagnetische Strahlung im nichtsichtbaren Wellenlängenbereich in Richtung eines Detektors, beispielsweise einer stationären Überwachungseinheit zu emittieren. Hierbei kann der Detektor dazu eingerichtet sein, die elektromagnetische Strahlung zu detektieren und in ein Ausgabesignal, beispielsweise ein elektrisches oder digitales Ausgabesignal, umzuwandeln. Das Ausgabesignal kann dabei dazu dienen, dem Benutzer den Zustand der Rotationsreinigungsdüse anzuzeigen.

Der Düsenstock 12 ist mit einer weiteren Ausnehmung 52 versehen, in der die Induktionsspule 34, die Kontrolleinheit 46, der Kondensator 48, und der Einweggleichrichter 50 angeordnet sind. Die weitere Ausnehmung 52 ist als eine einseitig geöffnete Ausnehmung bereitgestellt, die in dem Düsenstock 12 gegenüberliegend zu dem Zufuhrkanal 14 angeordnet und von diesem mittels einer Trennwand 54 getrennt ist. Die weitere Ausnehmung 52 ist über eine wiederverschließbare Verschlusskappe 56 für das fluidundurchlässig verschließbar. Hierfür ist an einem die weitere Ausnehmung 52 umschließenden Ende des Düsenstocks 12 ein Außengewinde vorgesehen, dass komplementär zu einem Innengewinde an der Verschlusskappe 56 ausgebildet ist. Die Verschlusskappe 56 ist aus einem Material hergestellt, das für das von der Kontrolleinheit 46 emittierte Licht durchlässig ist.

In einer alternativen Ausführungsform können die in der weiteren Ausnehmung 52 angeordneten Komponenten in dem Düsenkopf 16 angeordnet sein, sodass die Induktionsspule einen Rotor des Generators 30 bildet, wobei der Magnetring in dem Düsenstock 12 angeordnet sein kann und entsprechend einen Stator des Generators 30 bilden kann. Entsprechend kann die Kontrolleinheit zusammen mit der Induktionsspule in oder an dem Düsenkopf 16 angeordnet sein.

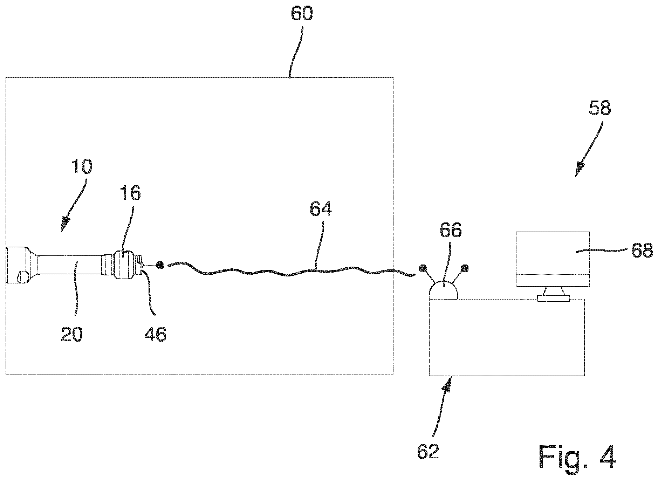

Figur 4 zeigt ein Reinigungssystem 58 zum Reinigen von Oberflächen in einer Getränkeabfüllanlage. Das Reinigungssystem 58 umfasst wenigstens eine in einem Reinraum 60 der Getränkeabfüllanlage angeordnete Rotationsreinigungsdüse 10 einer zweiten Ausführungsform und eine außerhalb des Reinraums 60 angeordnete stationäre Überwachungseinheit 62.

Gegenüber der in Figuren 1 bis 3 gezeigten Ausführungsform ist die Kontrolleinheit 46 der in Figur 4 gezeigten Rotationsreinigungsdüse 10 dazu eingerichtet, ein elektromagnetisches Signal in Form eines Funksignals 64 als das die Rotation des Düsenkopfes 16 anzeigende Signal zu emittieren. Die stationäre Überwachungseinheit 62 umfasst einen Empfänger 66 zum Empfangen des von der Kontrolleinheit 46 zu emittierenden Funksignals 64 und eine Ausgabeeinheit in Form eines Monitors 68 zum Ausgeben einer die Rotation des Reinigungskopfes 16 betreffenden Information für einen Benutzer in Erwiderung auf das durch den Empfänger 66 empfangene Funksignal 64. Indem die Kontrolleinheit 46 das Funksignal 64 emittiert, ermöglicht das hier gezeigte Reinigungssystem 58 eine kabellose Kommunikation zwischen der wenigstens einen Rotationsreinigungsdüse 10 und der stationären Überwachungseinheit 62 der Getränkeabfüllanlage.

Alternativ können die Kontrolleinheit 46 der Rotationsreinigungsdüse 10 und der Empfänger 66 über ein Kabel elektrisch leitend verbunden sein, wobei die Kontrolleinheit 46 ein elektrisches Signal über das Kabel emittieren kann.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 10: Rotationsreinigungsdüse
- 12: Düsenstock
- 14: Zufuhrkanal
- 16: Düsenkopf
- 18: Düsenaustrittsöffnung
- 20: Verbindungsmuffe
- 22: Zufuhrabschnitt
- 24: Zufuhröffnung
- 26: Seitenwand
- 28: axiale Richtung
- 30: Generator
- 32: Magnetring
- 34: Induktionsspule
- 36: Magnetläufer
- 38: Permanentmagnet
- 40: ferromagnetischer Käfig
- 42: flächiger Abschnitt
- 44: Spalt
- 46: Kontrolleinheit
- 48: Kondensator
- 50: Einweggleichrichter
- 52: weitere Ausnehmung
- 54: Trennwand
- 56: Verschlusskappe
- 58: Reinigungssystem
- 60: Reinraum einer Getränkeabfüllanlage
- 62: stationäre Überwachungseinheit
- 64: Funksignal
- 66: Empfänger
- 68: Monitor

## Patentansprüche

1. Rotationsreinigungsdüse (10) zum Reinigen von Oberflächen einer Getränkeabfüllanlage mittels eines Fluids, umfassend:
- einen Düsenstock (12) mit einem Zufuhrkanal (14) für das Fluid,
- einen an dem Düsenstock (12) drehbar gelagerten Düsenkopf (16) mit wenigstens einer Düsenaustrittsöffnung (18), aus der im Betrieb durch den Zufuhrkanal (14) und den Düsenkopf (16) strömendes Fluid in Form eines Reinigungsstrahls austritt,
- einen elektrischen Generator (30) zum Induzieren elektrischer Energie durch Rotation des Düsenkopfes (16), und
- eine Kontrolleinheit (46) zum Anzeigen einer Rotation des Düsenkopfes (16) in Abhängigkeit der induzierten elektrischen Energie
**dadurch gekennzeichnet, dass**
der Generator (30) einen an oder in dem Düsenkopf (16) angeordneten Rotor (32) und einen dazu ausgerichteten, an oder in dem Düsenstock (12) angeordneten Stator (34) umfasst, wobei
der Rotor in Form wenigstens eines Magneten (32) und der Stator in Form wenigstens einer Induktionsspule (34) bereitgestellt ist, oder
der Rotor in Form wenigstens einer Induktionsspule und der Stator in Form wenigstens eines Magneten bereitgestellt ist.

2. Rotationsreinigungsdüse nach Anspruch 1, **dadurch gekennzeichnet, dass** das dem Düsenkopf (16) im Betrieb über den Zufuhrkanal (14) zuzuführende und diesen zu durchströmende Fluid den Düsenkopf (16) rotatorisch betätigt und/oder ein Rotationsantrieb den Düsenkopf (16) rotatorisch betätigt.

3. Rotationsreinigungsdüse nach Anspruch 1 oder 2, **dadurch gekennzeichnet, dass** der Düsenkopf (16) dazu ausgebildet ist, bei rotatorischer Betätigung den Reinigungsstrahl in einer von einer Rotationsrichtung des Düsenkopfes (16) abgewandten Richtung, insbesondere einer zu der Rotationsrichtung entgegengesetzten Richtung, aus der Düsenaustrittsöffnung (18) auszustoßen.

4. Rotationsreinigungsdüse nach Anspruch 1 bis 3, **dadurch gekennzeichnet, dass** der Düsenkopf (16) mit wenigstens einem Zufuhrabschnitt (22) versehen ist, der dem Düsenkopf (16) über den Zufuhrkanal (14) zuführbares Fluid in Richtung der Düsenaustrittsöffnung (18) umlenkt.

5. Rotationsreinigungsdüse nach einem der Ansprüche 1 bis 4, **dadurch gekennzeichnet, dass** der Düsenstock (12) wenigstens eine Zufuhröffnung (24) aufweist, die den Zufuhrkanal (14) mit dem Düsenkopf (16), insbesondere mit dessen Zufuhrabschnitt (22), fluidkommunikativ verbindet, wobei insbesondere der Düsenstock (16) hülsenförmig ist und der Zufuhrkanal (14) in Form einer einseitig geöffneten Ausnehmung in dem Düsenstock (12) ausgebildet ist, in die die wenigstens eine Zufuhröffnung (24) mündet.

6. Rotationsreinigungsdüse nach einem der Ansprüche 1 bis 5, **dadurch gekennzeichnet, dass** der Magnet ein aus Permanentmagneten (38) aufgebauter Magnetring (32) ist, umfassend eine Vielzahl umlaufend nebeneinander angeordneter Magnetpole.

7. Rotationsreinigungsdüse nach einem der Ansprüche 1 bis 6, **dadurch gekennzeichnet, dass** die Induktionsspule (34) eine Ringspule ist, die insbesondere in einem ferromagnetischen Käfig (40) eingebettet ist, der an einer dem Magneten (32) zugwandten Seite mit einer Vielzahl in Umlaufrichtung voneinander beabstandeter flächiger Abschnitte (42) versehen ist, wobei insbesondere die flächigen Abschnitte (42) in deren Anzahl und Position an die Anzahl und Position der diesen zugewandten Magnetpole des Magneten (32) angepasst sind.

8. Rotationsreinigungsdüse nach einem der Ansprüche 1 bis 7, **dadurch gekennzeichnet, dass** der Generator (30), insbesondere die Induktionsspule (34), mit der Kontrolleinheit (46) elektrisch leitend verbunden ist, um der Kontrolleinheit (46) die durch den Generator (30) induzierte elektrische Energie zuzuführen.

9. Rotationsreinigungsdüse nach einem der Ansprüche 1 bis 8, **dadurch gekennzeichnet, dass** die Rotationsreinigungsdüse (10) einen Energiespeicher (48), insbesondere einen Kondensator, umfasst, der durch die von dem Generator (30) induzierte elektrische Energie aufladbar und dazu eingerichtet ist, die darin gespeicherte Energie der Kontrolleinheit (46) zuzuführen.

10. Rotationsreinigungsdüse nach einem der Ansprüche 1 bis 9, **dadurch gekennzeichnet, dass** die Kontrolleinheit (46) dazu eingerichtet ist, in Erwiderung auf die durch den Generator (30) induzierte elektrische Energie ein die Rotation des Düsenkopfes (16) anzeigendes Signal zu emittieren, wobei insbesondere das Signal ein elektromagnetisches Signal (64) und/oder ein elektrisches Signal ist.

11. Rotationsreinigungsdüse nach einem der Ansprüche 1 bis 10, **dadurch gekennzeichnet, dass** die Kontrolleinheit (46) eine Lichtquelle ist oder umfasst, insbesondere eine Leuchtdiode, die von dem Generator (30) oder dem Energiespeicher (48) bereitgestellte elektrische Energie zum Emittieren von Licht nutzt, wobei die Lichtquelle insbesondere Licht im sichtbaren Wellenlängenbereich und/oder Licht im nichtsichtbaren Wellenlängenbereich emittiert.

12. Rotationsreinigungsdüse nach einem der Ansprüche 1 bis 11, **dadurch gekennzeichnet, dass** die Kontrolleinheit (46) mit der Induktionsspule (34) verbunden ist und zusammen mit dieser in oder an dem Düsenkopf (16) oder dem Düsenstock (12) angeordnet ist, wobei insbesondere der Düsenkopf (16) oder der Düsenstock (12) aus einem für das von der Kontrolleinheit (46) emittierte Signal durchlässigen Material hergestellt ist.

13. Rotationsreinigungsdüse nach Anspruch 12, **dadurch gekennzeichnet, dass** die Kontrolleinheit (46) in einer weiteren Ausnehmung (52) in dem Düsenstock (12) angeordnet ist, die über eine Verschlusskappe (56) für das Fluid undurchlässig verschlossen ist, wobei die Verschlusskappe (56) aus einem für das von der Kontrolleinheit (46) emittierte Signal durchlässigen Material hergestellt ist.

14. Reinigungssystem (58) zum Reinigen von Oberflächen in einer Getränkeabfüllanlage, umfassend eine Rotationsreinigungsdüse (10) nach einem der Ansprüche 1 bis 13 und eine stationäre Überwachungseinheit (62) zum Empfangen eines von der Kontrolleinheit (46) der Rotationsreinigungsdüse (10) zu emittierenden, eine Rotation der Rotationsreinigungsdüse (10) anzeigenden Signals (64) und Ausgeben einer die Rotation betreffenden Information in Erwiderung auf das empfangene Signal (64).

## Claims

1. Rotary cleaning nozzle (10) for cleaning surfaces in a beverage filling system by means of a fluid, comprising:
- a nozzle assembly (12) with a supply channel (14) for the fluid,
- a nozzle head (16) rotationally mounted on the nozzle assembly (12) having at least one nozzle outlet opening (18), out of which during operation emerges fluid in the form of a cleaning jet, flowing through the supply channel (14) and the nozzle head (16),
- an electrical generator (30) for inducing electrical energy by means of rotation of the nozzle head (16), and
- a control unit (46) for displaying a rotation of the nozzle head (16) as a function of the induced electrical energy
**characterised in that**
the generator (30) comprises a rotor (32) arranged on or in the nozzle head (16) and a stator (34), aligned therewith, arranged on or in the nozzle assembly (12), wherein
the rotor is provided in the form of at least one magnet (32) and the stator is provided in the form of at least one induction coil (34), or
the rotor is provided in the form of at least one induction coil and the stator is provided in the form of at least one magnet.

2. Rotary cleaning nozzle according to claim 1, **characterised in that** the fluid which is to be supplied to the nozzle head (16) during operation via the supply channel (14), and which is to flow through it, actuates the nozzle head (16) rotationally and/or a rotary drive actuates the nozzle head (16) rotationally.

3. Rotary cleaning nozzle according to claim 1 or 2, **characterised in that** the nozzle head (16) is configured to emit the cleaning jet in a direction facing away from a rotational direction of the nozzle head (16), in particular a direction opposed to the rotational direction, from the nozzle outlet opening (18) during rotational actuation.

4. Rotary cleaning nozzle according to claim 1 to 3, **characterised in that** the nozzle head (16) is equipped with at least one supply portion (22) which directs fluid to be supplied to the nozzle head (16) via the supply channel (14) in the direction of the nozzle outlet opening (18).

5. Rotary cleaning nozzle according to any of claims 1 to 4, **characterised in that** the nozzle assembly (12) has at least one supply opening (24) which connects fluidically the supply channel (14) with the nozzle head (16), in particular with its supply portion (22), wherein in particular the nozzle assembly (16) is in the shape of a sleeve and the supply channel (14) is formed in the shape of a cutout, open on one side, in the nozzle assembly (12), into which the at least one supply opening (24) opens.

6. Rotary cleaning nozzle according to any of claims 1 to 5, **characterised in that** the magnet is a magnet ring (32) constructed of permanent magnets (38), comprising a multiplicity of magnetic poles arranged circumferentially next to one another.

7. Rotary cleaning nozzle according to any of claims 1 to 6, **characterised in that** the induction coil (34) is a toroidal coil which is in particular embedded in a ferromagnetic cage (40) which is equipped on a side facing towards the magnet (32) with a multiplicity of two-dimensional portions (42) distanced from one another in circumferential direction, wherein in particular the two-dimensional portions (42) are adapted in their number and position to the number and position of the magnetic poles of the magnet (32) facing them.

8. Rotary cleaning nozzle according to any of claims 1 to 7, **characterised in that** the generator (30), in particular the induction coil (34), is connected in an electrically conducting manner with the control unit (46) in order to supply the electrical energy induced by the generator (30) to the control unit (46).

9. Rotary cleaning nozzle according to any of claims 1 to 8, **characterised in that** the rotary cleaning nozzle (10) comprises an energy store (48), in particular a capacitor, which can be charged by means of the electrical energy induced by the generator (30) and is configured to supply the energy stored therein to the control unit (46).

10. Rotary cleaning nozzle according to any of claims 1 to 9, **characterised in that** the control unit (46) is configured to emit a signal displaying the rotation of the nozzle head (16) in response to the electrical energy induced by the generator (30), wherein in particular the signal is an electromagnetic signal (64) and/or an electrical signal.

11. Rotary cleaning nozzle according to any of claims 1 to 10, **characterised in that** the control unit (46) is or comprises a light source, in particular a light diode, which uses electrical energy provided by the generator (30) or the energy store (48) for emitting light, wherein the light source emits in particular light in the visible wavelength range and/or light in the non-visible wavelength range.

12. Rotary cleaning nozzle according to any of claims 1 to 11, **characterised in that** the control unit (46) is connected with the induction coil (34) and is arranged, together with this, in or against the nozzle head (16) or the nozzle assembly (12), wherein in particular the nozzle head (16) or the nozzle assembly (12) is made of a material which is permeable for the signal emitted by the control unit (46).

13. Rotary cleaning nozzle according to claim 12, **characterised in that** the control unit (46) is arranged in a further receptacle (52) in the nozzle assembly (12), which is closed by means of a closure cap (56) so as to be impermeable for the fluid, wherein the closure cap (56) is made of a material which is permeable for the signal emitted by the control unit (46).

14. Cleaning system (58) for cleaning surfaces in a beverage filling system, comprising a rotary cleaning nozzle (10) according to any of claims 1 to 13 and a stationary monitoring unit (62) for receiving a signal (64) to be emitted by the control unit (46) of the rotary cleaning nozzle (10) and displaying a rotation of the rotary cleaning nozzle (10), and for outputting information concerning the rotation in response to the received signal (64).

## Revendications

1. Buse de nettoyage rotative (10) pour le nettoyage de surfaces d'une installation de remplissage de boisson au moyen d'un fluide, comprenant :
- un porte-buse (12) avec un canal d'alimentation (14) pour le fluide,
- une tête de buse (16) logée de manière rotative au niveau du porte-buse (12) avec au moins une ouverture de sortie de buse (18), de laquelle du fluide s'écoulant en fonctionnement par le canal d'alimentation (14) et la tête de buse (16) sort sous la forme d'un jet de nettoyage,
- un générateur électrique (30) pour l'induction d'énergie électrique par rotation de la tête de buse (16), et
- une unité de contrôle (46) pour l'affichage d'une rotation de la tête de buse (16) en fonction de l'énergie électrique induite,
**caractérisé en ce que**
le générateur (30) comporte un rotor (32) agencé au niveau ou dans la tête de buse (16) et un stator (34) agencé au niveau ou dans le porte-buse (12), orienté par rapport à celui-ci, dans lequel
le rotor est fourni sous la forme d'au moins un aimant (32) et le stator sous la forme d'au moins une bobine à induction (34), ou
le rotor est fourni sous la forme d'au moins une bobine à induction et le stator sous la forme d'au moins un aimant.

2. Buse de nettoyage rotative selon la revendication 1, **caractérisée en ce que** le fluide à fournir à la tête de buse (16) en fonctionnement par le biais du canal d'alimentation (14) et traversant celui-ci actionne la tête de buse (16) de manière rotative et/ou un entraînement de rotation actionne de manière rotative la tête de buse (16).

3. Buse de nettoyage rotative selon la revendication 1 ou 2, **caractérisée en ce que** la tête de buse (16) est réalisée afin d'éjecter lors de l'actionnement rotatif le jet de nettoyage dans un sens éloigné d'un sens de rotation de la tête de buse (16), en particulier un sens opposé au sens de rotation, de l'ouverture de sortie de buse (18).

4. Buse de nettoyage rotative selon la revendication 1 à 3, **caractérisée en ce que** la tête de buse (16) est pourvue d'au moins une section d'alimentation (22) qui dévie du fluide pouvant être fourni à la tête de buse (16) par le biais du canal d'alimentation (14) en direction de l'ouverture de sortie de buse (18).

5. Buse de nettoyage rotative selon l'une quelconque des revendications 1 à 4, **caractérisée en ce que** le porte-buse (12) présente au moins une ouverture d'alimentation (24) qui relie en communication de fluide le canal d'alimentation (14) à la tête de buse (16), en particulier avec sa section d'alimentation (22), dans laquelle en particulier le porte-buse (16) est en forme de douille et le canal d'alimentation (14) est réalisé sous la forme d'un évidement ouvert d'un côté dans le porte-buse (12), dans lequel l'au moins une ouverture d'alimentation (24) débouche.

6. Buse de nettoyage rotative selon l'une quelconque des revendications 1 à 5, **caractérisée en ce que** l'aimant est un anneau magnétique (32) constitué d'aimants permanents (38) comprenant une pluralité de pôles magnétiques agencés en périphérie les uns à côté des autres.

7. Buse de nettoyage rotative selon l'une quelconque des revendications 1 à 6, **caractérisée en ce que** la bobine à induction (34) est une bobine annulaire qui est intégrée en particulier dans une cage (40) ferromagnétique qui est pourvue au niveau d'un côté tourné vers l'aimant (32) d'une pluralité de sections (42) planes espacées les unes des autres dans le sens périphérique, dans laquelle en particulier les sections (42) planes sont adaptées dans leur nombre et position au nombre et à la position des pôles magnétiques tournés vers celles-ci de l'aimant (32).

8. Buse de nettoyage rotative selon l'une quelconque des revendications 1 à 7, **caractérisée en ce que** le générateur (30), en particulier la bobine à induction (34), est relié de manière électroconductrice à l'unité de contrôle (46) afin d'alimenter l'unité de contrôle (46) en énergie électrique induite par le générateur (30).

9. Buse de nettoyage rotative selon l'une quelconque des revendications 1 à 8, **caractérisée en ce que** la buse de nettoyage rotative (10) comporte un accumulateur d'énergie (48), en particulier un condensateur qui peut être chargé par l'énergie électrique induite par le générateur (30) et est conçu afin d'alimenter en énergie accumulée dedans l'unité de contrôle (46).

10. Buse de nettoyage rotative selon l'une quelconque des revendications 1 à 9, **caractérisée en ce que** l'unité de contrôle (46) est conçue afin d'émettre en réaction à l'énergie électrique induite par le générateur (30) un signal affichant la rotation de la tête de buse (16), dans laquelle en particulier le signal est un signal (64) électromagnétique et/ou un signal électrique.

11. Buse de nettoyage rotative selon l'une quelconque des revendications 1 à 10, **caractérisée en ce que** l'unité de contrôle (46) est ou comporte une source de lumière, en particulier une diode luminescente qui utilise de l'énergie électrique fournie par le générateur (30) ou l'accumulateur d'énergie (48) pour l'émission de lumière, dans laquelle la source de lumière émet en particulier de la lumière dans la plage de longueur d'onde visible et/ou de la lumière dans la plage de longueur d'onde non-visible.

12. Buse de nettoyage rotative selon l'une quelconque des revendications 1 à 11, **caractérisée en ce que** l'unité de contrôle (46) est reliée à la bobine d'induction (34) et est agencée conjointement avec celle-ci dans ou au niveau de la tête de buse (16) ou le porte-buse (12), dans laquelle en particulier la tête de buse (16) ou le porte-buse (12) est fabriqué en un matériau perméable pour le signal émis par l'unité de contrôle (46).

13. Buse de nettoyage rotative selon la revendication 12, **caractérisée en ce que** l'unité de contrôle (46) est agencée dans un autre évidement (52) dans le porte-buse (12) qui est fermé par le biais d'un capuchon de fermeture (56) de manière imperméable pour le fluide, dans laquelle le capuchon de fermeture (56) est fabriqué en un matériau perméable pour le signal émis par l'unité de contrôle (46).

14. Système de nettoyage (58) pour le nettoyage de surfaces dans une installation de remplissage de boisson, comprenant une buse de nettoyage rotative (10) selon l'une quelconque des revendications 1 à 13 et une unité de surveillance (62) stationnaire pour la réception d'un signal (64) à émettre par l'unité de contrôle (46) de la buse de nettoyage rotative (10), affichant une rotation de la buse de nettoyage rotative (10) et la sortie d'une information concernant la rotation en réaction au signal reçu (64).
